# FASCICULE DE BREVET EUROPEEN

(11) **EP 2 422 087 B1**
(45) Date de publication et mention de la délivrance du brevet: **24.01.2018**
(21) Numéro de dépôt: 10723714.1
(22) Date de dépôt: 20.04.2010
(51) Int. Cl.: F04B 1/18, F04B 7/00, F04B 15/02, B29C 47/08, B29C 47/50

(54) **POMPE VOLUMETRIQUE COMPRENANT UN ABSORBEUR DE PRESSION**
VERDRÄNGERPUMPE MIT EINEM DRUCKABSORBER
POSITIVE-DISPLACEMENT PUMP INCLUDING A PRESSURE ABSORBER

(30) Priorité: 24.04.2009 FR 0952708
(43) Date de publication de la demande: 29.02.2012
(73) Titulaire: Compagnie Générale des Etablissements Michelin, 63000 Clermont-Ferrand (FR)
(72) Inventeur: OUGIER, Christophe, F-63450 Le Crest (FR)
(74) Mandataire: Noel, Luminita
(86) Numéro de dépôt international: PCT/FR2010/050763
(87) Numéro de publication internationale: WO 2010/122268

(56) Documents cités:
- FR-A- 2 721 662
- US-A- 3 477 097
- US-A- 4 155 969

## Description

La présente invention concerne le domaine technique des pompes volumétriques de produits viscoélastiques, notamment de gomme pour la fabrication de pneumatiques.

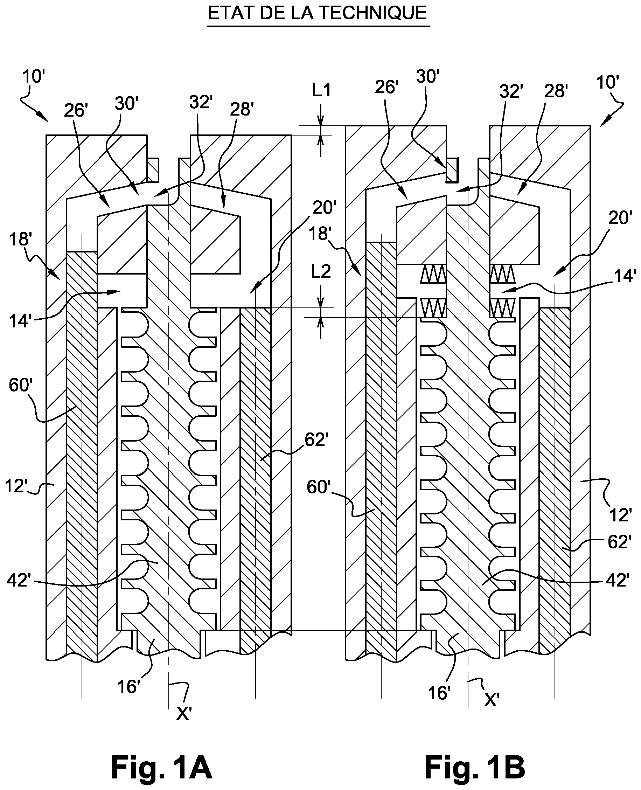

On connaît déjà du document FR 2 721 662 une pompe volumétrique représentée sur les figures 1A et 1B.

La figure 1A illustre la pompe de l'état de la technique à vide et au repos. La pompe volumétrique 10' comprend un corps de pompe 12' et un élément de gavage 16' comprenant une vis sans fin 42'. La vis 42' est mobile en rotation par rapport au corps 12' autour d'un axe principal X'.

La pompe volumétrique 10' comprend une chambre 14' de mise sous pression de gomme ainsi que deux chambres 18', 20' de dosage de la gomme communiquant avec la chambre 14' de mise sous pression. Chaque chambre 18', 20' de dosage débouche dans un canal 26', 28' de circulation de la gomme qui, à son tour, débouche dans une chambre 32' d'admission d'un organe 30' de distribution de la gomme.

La pompe 10' comprend également deux pistons 60', 62' mobiles dans les chambres 18', 20' de dosage entre un point mort haut et un point mort bas selon un mouvement alternatif cyclique.

La figure 1B illustre la pompe de l'état de la technique contenant de la gomme et en fonctionnement. Lorsque l'un des pistons 60', 62' est au point mort haut, la pression de gomme dans la chambre 14' de mise sous pression monte. Du fait du mouvement alternatif de la pompe, les chambres 18', 20' de dosage sont pleines à des instants non prévisibles et variables selon la fluidité de la gomme. Il en résulte de très fortes variations de pression dans la chambre 14' de mise en pression.

La pression s'exerce axialement dans la chambre 14', d'une part, sur la vis 42' et, d'autre part, sur une partie du corps 12' de pompe disposée axialement au droit de la vis 42'. Cette pression est représentée par des flèches sur la figure 1B. Par réaction à cette montée en pression axiale, le corps 12' de pompe s'allonge axialement d'une longueur L1 alors que la vis 42' se comprime axialement d'une longueur L2.

L'allongement axial L1 du corps 12' de pompe entraîne une variation des volumes des chambres 18', 20' de dosage et des canaux 26', 28' de circulation. En outre, l'allongement axial L1 du corps 12' entraîne un décalage entre la chambre 32' d'admission et chaque canal 26', 28' de circulation. La gomme étant peu compressible, la variation de ces volumes et le décalage entraînent alors une variation de pression et de débit de sortie de la pompe 10'.

L'invention a pour but d'obtenir un débit de sortie de la pompe relativement régulier.

A cet effet, l'invention a pour objet une pompe volumétrique comprenant un corps de pompe délimitant une chambre de mise sous pression de gomme, et un élément de gavage de la chambre avec de la gomme, l'élément de gavage comprenant une vis sans fin mobile en rotation autour d'un axe principal par rapport au corps de pompe, **caractérisée en ce que** l'élément de gavage comprend un corps d'absorption de la pression de la chambre de mise sous pression solidaire axialement de la vis et distinct de la vis, le corps d'absorption présentant une surface délimitant la chambre de mise sous pression et disposée axialement au droit de la vis.

La pompe volumétrique selon l'invention permet d'obtenir un débit de sortie régulier. En effet, dans la pompe selon l'invention, la montée en pression s'exerce sur la vis et sur le corps d'absorption. La pression exercée sur le corps de pompe dans la pompe de l'état de la technique est absorbée par l'élément de gavage, en particulier par la partie de l'élément de gavage compris entre le corps d'absorption et la vis de la pompe selon l'invention. Ainsi, la pression exercée par la gomme dans la chambre de mise sous pression s'exerce sur un même élément, ici l'élément de gavage, plus particulièrement sur la vis et le corps d'absorption. Comme le corps d'absorption est solidaire axialement de la vis, seul l'élément de gavage se déforme de façon limitée voire inexistante. La pression axiale exercée par la gomme dans la chambre de mise sous pression ne s'exerce donc pas sur deux éléments susceptibles de se déplacer axialement l'un par rapport à l'autre comme dans la pompe de l'état de la technique. Sans allongement axial du corps de pompe, les chambres de dosage et les canaux de circulation conservent leurs volumes respectifs permettant ainsi de maintenir une pression constante et donc un débit de sortie régulier.

La surface est disposée axialement au droit de la vis, c'est-à-dire que la surface fait axialement face à la vis, notamment à son filet, ou bien encore que la vis, notamment son filet, et la surface sont axialement en vis-à-vis.

De préférence, le corps d'absorption et la vis sans fin sont d'un seul tenant.

Avantageusement, le corps de pompe comprend un logement d'accueil du corps d'absorption dans lequel le corps d'absorption est mobile par glissement contre le corps de pompe.

Il est ainsi possible de modifier facilement une pompe de l'état de la technique en pompe selon l'invention. Il est notamment possible de conserver inchangé le volume de la chambre de mise sous pression.

Selon des caractéristiques optionnelles de la pompe selon l'invention :
- La pompe comprend un organe de distribution rotatif apte à mettre en communication une chambre de dosage avec une chambre de refoulement de la pompe via une chambre d'admission de l'organe de distribution.
- La pompe comprend au moins un piston de dosage de gomme mobile par rapport au corps de pompe dans la chambre de dosage, l'organe de distribution étant synchronisé avec chaque piston de dosage et/ou l'élément de gavage.
- Chaque piston est mobile entre :
   - un point mort haut correspondant à une phase de refoulement de la gomme depuis la chambre de dosage vers la chambre de refoulement, et
   - un point mort bas correspondant à une phase d'admission de la gomme dans la chambre de dosage depuis la chambre de mise sous pression.
- La pompe comprend des premier et deuxième pistons de dosage mobiles par rapport au corps de pompe respectivement dans des première et deuxième chambres de dosage selon un mouvement alternatif cyclique, de préférence en opposition de phase.
- L'organe de distribution est mobile en rotation par rapport au corps de la pompe entre :
   - une position de refoulement de la gomme de chaque première et deuxième chambre de dosage correspondant au point mort haut respectivement de chaque premier et deuxième piston, et
   - une position d'admission de la gomme dans chaque première et deuxième chambre de dosage correspondant au point mort bas respectivement de chaque premier et deuxième piston.
- Selon une autre caractéristique optionnelle :
   - la position de refoulement correspond à une mise en communication entre la chambre de dosage et la chambre de refoulement via la chambre d'admission, et
   - la position d'admission correspond à une mise en communication entre la chambre de mise sous pression et la chambre de dosage.

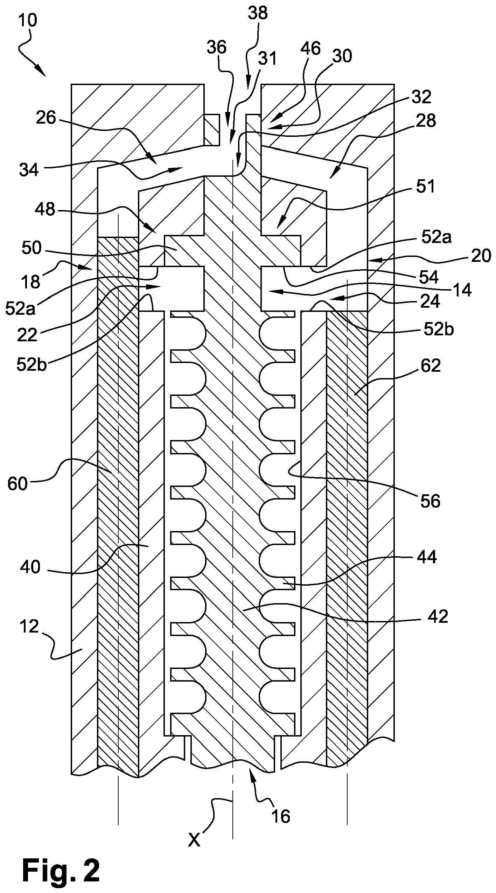

L'invention sera mieux comprise à la lecture de la description qui va suivre, donnée uniquement à titre d'exemple non limitatif et faite en se référant aux dessins dans lesquels la figure 2 représente une pompe volumétrique selon l'invention, et est désignée par la référence générale 10.

La pompe volumétrique 10 permet de doser de la gomme, notamment utilisée pour la réalisation de bandes destinées à la fabrication de pneumatiques. La pompe 10 comprend un corps 12 de pompe délimitant une chambre 14 de mise sous pression de la gomme. La pompe 10 comprend également un élément de gavage 16, agencé dans le corps 12.

La pompe 10 comprend des première et deuxième chambres 18, 20 de dosage de la gomme communiquant avec la chambre 14 de mise sous pression grâce à des orifices 22 et 24 de communication.

Chaque chambre 18, 20 de dosage débouche dans un canal de circulation respectivement 26, 28 de la gomme.

Chaque canal 26, 28 débouche dans un organe 30 de distribution de la gomme. L'organe 30 comporte un canal 31 d'admission de la gomme dans l'organe 30. Ce canal 31 forme une chambre 32 d'admission de la gomme. La chambre d'admission 32 ou canal 31 comporte une entrée radiale 34 ménagée sur la périphérie de l'organe 30, et une sortie axiale 36 ménagée à une extrémité axiale de l'organe 30.

La chambre 32 d'admission débouche dans une chambre 38 de refoulement de la gomme vers l'extérieur de la pompe 10. La chambre d'admission 32 est agencée de façon à mettre en communication chaque canal 26, 28 et la chambre de refoulement 38.

L'élément de gavage 16 est mobile en rotation autour d'un axe principal X par rapport au corps 12. A cet effet, le corps 12 comprend un fourreau 40 sensiblement cylindrique dans lequel tourne l'élément 16. L'élément de gavage 16 est fixe axialement par rapport au corps 12.

L'élément 16 comprend une partie axiale filetée 42 de cisaillement formant une vis sans fin destinée à mélanger la gomme et à la mettre en température. La partie 42 comporte un filet 44.

L'élément 16 comprend également une partie axiale 46 de distribution de la gomme depuis la pompe 10 vers l'extérieur de celle-ci. La partie axiale 46 comprend notamment l'organe 30.

En outre, l'élément 16 comprend une partie axiale 48 d'absorption de la pression exercée par la gomme entre la partie axiale 42 et la partie axiale 48, intercalée axialement entre les parties de cisaillement 42 et de distribution 46. La partie axiale 48 d'absorption est distincte des parties 42 et 46.

La partie axiale d'absorption 48 comprend un corps 50 d'absorption de pression de la gomme de la chambre 14. Le corps 50 est solidaire axialement et tangentiellement de la vis 42. Le corps 50 et la vis 42 sont ici d'un seul tenant si bien que le corps 50 est mobile en rotation autour de l'axe X par rapport au corps 12. Le corps 50 présente une forme de révolution autour de l'axe X sensiblement cylindrique, et est conformé de sorte que la chambre 14 est intercalée axialement entre la vis 42 et le corps 50. Le corps 50 est distinct du corps 12, de la vis 42 et de l'organe 30.

Le corps 50 est au contact du corps 12 de pompe. Le corps 12 de pompe comprend un logement 51 d'accueil du corps 50 d'absorption, dans lequel ce dernier est mobile par glissement contre le corps 12 de pompe.

La chambre 14 est délimitée d'une part, par le corps 12 de pompe et, d'autre part, par le corps 50 d'absorption. En l'espèce, la chambre 14 est délimitée par des surfaces 52 du corps de pompe 12 et une surface 54 du corps d'absorption 50.

Les surfaces 52 du corps de pompe comprennent des surfaces 52a, 52b de guidage radial de la gomme vers les chambres 18, 20 de dosage et une surface 56 du fourreau 40 de guidage axial de la gomme. Les surfaces 52a, 52b sont en regard l'une de l'autre de part et d'autres de la chambre 14. Les surfaces 52a, 52b et 54 subissent une pression sensiblement axiale alors que la surface 56 subit une pression sensiblement radiale.

La surface 54 du corps d'absorption est disposée axialement au droit de la partie axiale de cisaillement, ici la vis 42, et du fourreau 40. En d'autres termes, la surface 54 fait axialement face à la vis 42 et au fourreau 40. Comme représenté sur la figure 2, la surface 54 est disposée axialement au droit du filet 44, c'est-à-dire que la surface 54 et le filet 44 sont axialement en vis-à-vis. Le corps d'absorption 50 est agencé axialement entre le corps 12 de pompe et la chambre 14 au contact du corps 12 de sorte que l'élément de gavage 16 absorbe la pression axiale exercée par la gomme entre la vis 42, ici le filet 44, et le corps d'absorption 50, ici la surface 54, dans la chambre de mise sous pression 14. La dimension radiale du corps d'absorption 50 est supérieure ou égale à la dimension radiale de la vis 42 de sorte que la vis 42 est axialement disposée au droit de la seule surface 54. La dimension radiale, ici le diamètre du corps 50 est sensiblement égal à la dimension radiale du fourreau 40 ou de la vis 42. En l'espèce, le diamètre du corps 50 est sensiblement égal au diamètre du fourreau 40 de sorte que la surface 54 ne fait face à aucune surface du corps 12 de la pompe. Ainsi, la vis 42, ici le filet 44, est agencée de sorte que la vis 42, ici le filet 44, n'est disposée axialement qu'au droit de la surface 54. La surface 54 est agencée de sorte qu'elle n'est sensiblement pas disposée axialement au droit du corps 12 de pompe 10 et de sorte que la surface 54 n'est disposée axialement qu'au droit de la vis 42, ici le filet 44. La pression axiale exercée par la gomme entre le corps 50 et le filet 44 est absorbée entièrement par l'élément de gavage 16. Chaque surface 52a est disposée au droit de la surface 52b. La surface 54 et le filet 44 forment deux butées axiales en vis-à-vis l'une de l'autre permettant d'absorber la pression exercée par la gomme entre ces deux butées.

En outre, la pompe 10 comprend des premier et deuxième pistons 60, 62 mobiles respectivement dans les chambres de dosage 18, 20 entre :
- un point mort haut (piston 60 sur la figure 2) correspondant à une phase de refoulement de la gomme depuis la chambre de dosage 18 vers la chambre de refoulement 34, et
- un point mort bas (piston 62 sur la figure 2) correspondant à une phase d'admission de la gomme dans la chambre de dosage 20 depuis la chambre de mise sous pression 14.

Les pistons 60, 62 sont mobiles selon un mouvement alternatif cyclique en opposition de phase, c'est-à-dire que chaque piston 60, 62 oscille entre les points mort haut et bas et, lorsqu'un des pistons 60, 62 est au point mort haut, l'autre piston 62, 60 est au point mort bas. Lorsque chaque piston 60, 62 est au point mort haut, il délimite la chambre de mise sous pression 14.

L'organe 30 de distribution est mobile en rotation autour de l'axe X par rapport au corps de la pompe 10 entre :
- une position de refoulement (position de l'organe 30 vis-à-vis de la chambre 18 et du piston 60 sur la figure 2) de la gomme de chaque chambre de dosage 18, 20 correspondant au point mort haut de chaque piston 60, 62, et
- une position d'admission (position de l'organe 30 vis-à-vis de la chambre 20 et du piston 62 sur la figure 2) de la gomme dans chaque chambre de dosage 18, 20 correspondant au point mort bas de chaque piston 60, 62.

L'organe 30 de distribution est synchronisé avec chaque piston 60, 62 de dosage. Ainsi, la position de refoulement correspond à une mise en communication entre la chambre de dosage 18, 20 et la chambre de refoulement 34 via la chambre d'admission 32. La position d'admission correspond à une mise en communication entre la chambre de mise sous pression 14 et la chambre de dosage 18, 20.

## Revendications

1. Pompe volumétrique (10) comprenant un corps de pompe (12) délimitant une chambre (14) de mise sous pression de gomme, et un élément (16) de gavage de la chambre (14) avec de la gomme, l'élément de gavage (16) comprenant une vis sans fin (42) mobile en rotation autour d'un axe principal (X) par rapport au corps de pompe (12), **caractérisée en ce que** l'élément de gavage (16) comprend un corps d'absorption (50) de la pression de la chambre (14) de mise sous pression solidaire axialement de la vis (42) et distinct de la vis (42), le corps d'absorption (50) présentant une surface (54) délimitant la chambre (14) de mise sous pression et disposée axialement au droit de la vis (42).

2. Pompe (10) selon la revendication 1, dans laquelle le corps d'absorption (50) et la vis sans fin (42) sont d'un seul tenant.

3. Pompe (10) selon la revendication 1 ou 2, dans laquelle le corps de pompe (12) comprend un logement (51) d'accueil du corps d'absorption (50) dans lequel le corps d'absorption (50) est mobile par glissement contre le corps de pompe (12).

4. Pompe (10) selon l'une quelconque des revendications précédentes, comprenant un organe de distribution (30) rotatif apte à mettre en communication une chambre de dosage (18, 20) avec une chambre de refoulement (38) de la pompe (10) via une chambre d'admission (32) de l'organe de distribution (30).

5. Pompe (10) selon la revendication 4, comprenant au moins un piston (60, 62) de dosage de gomme mobile par rapport au corps de pompe (12) dans la chambre de dosage (18, 20), l'organe de distribution (30) étant synchronisé avec chaque piston (60, 62) de dosage et/ou l'élément de gavage (16).

6. Pompe (10) selon la revendication 5, dans laquelle chaque piston (60, 62) est mobile entre :
- un point mort haut correspondant à une phase de refoulement de la gomme depuis la chambre de dosage (18, 20) vers la chambre de refoulement (38), et
- un point mort bas correspondant à une phase d'admission de la gomme dans la chambre de dosage (18, 20) depuis la chambre de mise sous pression (14).

7. Pompe (10) selon l'une quelconque des revendications 5 ou 6, comprenant des premier et deuxième pistons (60, 62) de dosage mobiles par rapport au corps de pompe (12) respectivement dans des première et deuxième chambres de dosage (18, 20) selon un mouvement alternatif cyclique, de préférence en opposition de phase.

8. Pompe (10) selon les revendications 6 et 7 prises ensemble, dans laquelle l'organe de distribution (30) est mobile en rotation par rapport au corps de la pompe (12) entre :
- une position de refoulement de la gomme de chaque première et deuxième chambre de dosage (18, 20) correspondant au point mort haut respectivement de chaque premier et deuxième piston (60, 62), et
- une position d'admission de la gomme dans chaque première et deuxième chambre de dosage (18, 20) correspondant au point mort bas respectivement de chaque premier et deuxième piston (60, 62).

9. Pompe (10) selon la revendication 8, dans laquelle :
- la position de refoulement correspond à une mise en communication entre la chambre de dosage (18, 20) et la chambre de refoulement (38) via la chambre d'admission (32), et
- la position d'admission correspond à une mise en communication entre la chambre de mise sous pression (14) et la chambre de dosage (18, 20).

## Patentansprüche

1. Verdrängerpumpe (10), umfassend einen Pumpenkörper (12), der eine Kammer (14) zur Druckbeaufschlagung von Gummi abgrenzt, und ein Element (16) zum Aufladen der Kammer (14) mit dem Gummi, wobei das Element zum Aufladen (16) eine Förderschnecke (42) umfasst, die drehbar um eine Hauptachse (X) bezogen auf den Pumpenkörper (12) beweglich ist, **dadurch gekennzeichnet, dass** das Element zum Aufladen (16) einen Körper zum Absorbieren (50) des Drucks der Kammer (14) zur Druckbeaufschlagung umfasst, der axial mit der Schnecke (42) fest verbunden und von der Schnecke (42) gesondert ist, wobei der Körper zum Absorbieren (50) eine Fläche (54) aufweist, die die Kammer (14) zur Druckbeaufschlagung abgrenzt und axial senkrecht zu der Schnecke (42) angeordnet ist.

2. Pumpe (10) nach Anspruch 1, wobei der Körper zum Absorbieren (50) und die Förderschnecke (42) einstückig sind.

3. Pumpe (10) nach Anspruch 1 oder 2, wobei der Pumpenkörper (12) eine Aufnahme (51) zum Aufnehmen des Körpers zum Absorbieren (50) umfasst, wobei der Körper zum Absorbieren (50) durch Gleiten gegen den Pumpenkörper (12) beweglich ist.

4. Pumpe (10) nach einem der vorhergehenden Ansprüche, umfassend ein drehbares Verteilorgan (30), das in der Lage ist, eine Dosierkammer (18, 20) mit einer Ausstoßkammer (38) der Pumpe (10) über eine Einlasskammer (32) des Verteilorgans (30) in Verbindung zu bringen.

5. Pumpe (10) nach Anspruch 4, umfassend mindestens einen Kolben (60, 62) zum Dosieren von Gummi, der bezogen auf den Pumpenkörper (12) in der Dosierkammer (18, 20) beweglich ist, wobei das Verteilorgan (30) mit jedem Kolben (60, 62) zum Dosieren und/oder dem Element zum Aufladen (16) synchronisiert ist.

6. Pumpe (10) nach Anspruch 5, wobei jeder Kolben (60, 62) beweglich ist zwischen:
- einem oberen Totpunkt, der einer Ausstoßphase des Gummis aus der Dosierkammer (18, 20) hin zu der Ausstoßkammer (38) entspricht, und
- einem unteren Totpunkt, der einer Einlassphase des Gummis in die Dosierkammer (18, 20) aus der Kammer zur Druckbeaufschlagung (14) entspricht.

7. Pumpe (10) nach einem der Ansprüche 5 oder 6, umfassend einen ersten und einen zweiten Dosierkolben (60, 62), die bezogen auf den Pumpenkörper (12) in einer ersten bzw. zweiten Dosierkammer (18, 20) gemäß einer wechselnden zyklischen, vorzugsweise gegenphasigen Bewegung beweglich sind.

8. Pumpe (10) nach den Ansprüchen 6 und 7 zusammengenommen, wobei das Verteilorgan (30) bezogen auf den Pumpenkörper (12) drehbeweglich ist zwischen:
- einer Position zum Ausstoßen des Gummis aus jeder der ersten und der zweiten Dosierkammer (18, 20), die dem oberen Totpunkt jedes des ersten bzw. des zweiten Kolbens (60, 62) entspricht, und
- einer Position zum Einlassen des Gummis in jede der ersten und der zweiten Dosierkammer (18, 20), die dem unteren Totpunkt jedes des ersten bzw. des zweiten Kolbens (60, 62) entspricht.

9. Pumpe (10) nach Anspruch 8, wobei:
- die Position zum Ausstoßen einer Verbindungsherstellung zwischen der Dosierkammer (18, 20) und der Ausstoßkammer (38) über die Einlasskammer (32) entspricht, und
- die Position zum Einlassen einer Verbindungsherstellung zwischen der Kammer zur Druckbeaufschlagung (14) und der Dosierkammer (18, 20) entspricht.

## Claims

1. Positive-displacement pump (10) comprising a pump body (12) delimiting a rubber pressurizing chamber (14), and a feeder (16) for feeding the chamber (14) with rubber, the feeder (16) comprising an endless screw (42) able to rotate about a main axis (X) with respect to the pump body (12), **characterized in that** the feeder (16) comprises an absorption body (50) that absorbs the pressure of the pressurizing chamber (14) and is axially secured to the screw (42) and distinct from the screw (42), the absorption body (50) having a surface (54) delimiting the pressurizing chamber (14) and arranged axially in line with the screw (42).

2. Pump (10) according to Claim 1, in which the absorption body (50) and the endless screw (42) are of a single piece.

3. Pump (10) according to Claim 1 or 2, in which the pump body (12) comprises a reception housing (51) for the absorption body (50), in which housing the absorption body (50) is able to move by sliding against the pump body (12).

4. Pump (10) according to any one of the preceding claims, comprising a rotary distribution member (30) able to place a metering chamber (18, 20) in communication with a delivery chamber (38) of the pump (10) via an inlet chamber (32) of the distribution member (30).

5. Pump (10) according to Claim 4, comprising at least one rubber metering piston (60, 62) able to move with respect to the pump body (12) in the metering chamber (18, 20), the distribution member (30) being synchronized with each metering piston (60, 62) and/or with the feeder (16).

6. Pump (10) according to Claim 5, in which each piston (60, 62) is able to move between:
- a top dead position corresponding to a phase of delivering the rubber from the metering chamber (18, 20) to the delivery chamber (38), and
- a bottom dead position corresponding to a phase of letting the rubber into the metering chamber (18, 20) from the pressurizing chamber (14).

7. Pump (10) according to either one of Claims 5 and 6, comprising first and second metering pistons (60, 62) able to move with respect to the pump body (12) in first and second metering chambers (18, 20) respectively, with a cyclic reciprocating movement, preferably in phase-opposition.

8. Pump (10) according to Claims 6 and 7 considered together, in which the distribution member (30) is able to rotate with respect to the pump body (12) between:
- a position of delivering the rubber from each first and second metering chamber (18, 20), corresponding to the top dead position of each first and second piston (60, 62) respectively, and
- a position of letting the rubber into each first and second metering chamber (18, 20), corresponding to the bottom dead position of each first and second piston (60, 62) respectively.

9. Pump (10) according to Claim 8, in which:
- the delivery position corresponds to the metering chamber (18, 20) and the delivery chamber (38) being placed in communication with one another via the inlet chamber (32), and
- the inlet position corresponds to the pressurizing chamber (14) and the metering chamber (18, 20) being placed in communication with each other.
